# EUROPÄISCHE PATENTSCHRIFT

(11) **EP 0 709 251 B1**
(45) Veröffentlichungstag und Bekanntmachung des Hinweises auf die Patenterteilung: **19.05.1999**
(21) Anmeldenummer: 95116215.5
(22) Anmeldetag: 14.10.1995
(51) Int. Cl.: B60Q 1/30

(54) **Leuchte für Fahrzeuge**
Vehicle lights
Feux pour véhicule

(30) Priorität: 28.10.1994 DE 4438491
(43) Veröffentlichungstag der Anmeldung: 01.05.1996
(73) Patentinhaber: Hella KG Hueck & Co., 59552 Lippstadt (DE)
(72) Erfinder: Schulte, Achim, D-59755 Arnsberg (DE); Wallmeier, Wilhelm Friedrich, D-59557 Lippstadt (DE)

(56) Entgegenhaltungen:
- EP-A- 0 559 107
- DE-A- 4 035 639
- DE-C- 3 538 361
- DE-U- 9 112 853
- US-A- 4 945 456

## Beschreibung

Die Erfindung betrifft eine Leuchte für Fahrzeuge, mit einem an der Fahrzeugkarosserie befestigbaren Basiselement, mit einer auf das Basiselement aufgesetzten Abdeckhaube, mit mindestens einem zwischen Basiselement und Abdeckhaube angeordneten Reflektor, welcher auf seiner Vorderseite durch eine quer zum Basiselement verlaufende lichtdurchlässige Lichtscheibe abgeschlossen ist und mit einer von der Vorderseite des Reflektors her in eine Öffnung des Reflektors eingesetzten Lampe.

Eine solche Leuchte für Fahrzeuge ist aus der EP 0 499 081 A1 bekannt. Die Leuchte dient als zusätzliche Bremsleuchte für das Fahrzeug und ist hinter der Heckscheibe des Fahrzeuges nahe dem oberen Rand der Heckscheibe hängend an der Fahrzeugkarosserie befestigt. Das Basisteil ist plattenförmig gestaltet und liegt an der Fahrzeugkarosserie an. Der in den Innenraum der Leuchte eingesetzte Reflektor liegt sowohl an der Innenseite des Basiselementes als auch an der Innenseite der Abdeckhaube an. Die Lichtscheibe ist plattenförmige ausgeführt und verläuft senkrecht zum plattenförmigen Basiselement. Die Lichtscheibe ist in eine von dem Basiselement und der Abdeckhaube gebildete Öffnung eingesetzt und liegt mit der inneren Seite ihres umlaufenden Randabschnitts an Vorsprüngen der Abdeckhaube und des Basiselementes an.

Aufgabe der Erfindung ist es, die im Oberbegriff des Anspruchs 1 beschriebene Leuchte für Fahrzeuge derart zu gestalten, daß zwischen der Abdeckhaube und dem Basiselement eine im Aufbau einfache und von der Außenseite der Leuchte her nicht zu sehende Verbindungseinrichtung besteht und darüber hinaus für die Lichtscheibe kein zusätzliches Befestigungselement notwendig ist und nach dem Abnehmen der Abdeckhaube von dem Basiselement die Lampe von der Vorderseite des Reflektors her zugänglich ist. Diese Aufgabe wird nach der Erfindung dadurch gelöst, daß der Reflektor und Kontaktierungseinrichtungen für die Lampe von dem Basiselement getragen sind und daß an der Innenseite der Abdeckhaube mindestens ein Federelement befestigt ist, welches die Lichtscheibe mit einem federnden ersten Abschnitt gegen die Innenseite der Abdeckhaube drückt und welches mit einem federnden zweiten Abschnitt selbsttätig in eine Hinterschneidung des Basiselements eingreift. Ein Wechsel der Lampe ist nicht nur leicht durchführbar, weil nach dem Abnehmen der Abdeckhaube die Lampe von der Vorderseite des Reflektors leicht zugänglich ist, sondern auch weil die Abdeckhaube nach ihrem Abnehmen weder mit dem Reflektor noch den Kontaktierungseinrichtungen für die Lampe verbunden ist. Da ein Wechsel der Lampe von der Vorderseite des Reflektors her erfolgt, kann der Abstand zwischen Lampe und Lichtscheibe sehr klein gehalten werden, und somit kann die Bautiefe der Leuchte entsprechend klein sein. Die Montage der Lichtscheibe ist sehr einfach und schnell durchführbar, wenn die Lichtscheibe vor dem Befestigen des Federelementes auf die Abdeckhaube aufgesetzt und zu dieser ausgerichtet wird, weil durch das Befestigen des Federelementes an der Abdeckhaube gleichzeitig die Befestigung der Lichtscheibe erfolgt. Für das Federelement sollte ein Material gewählt sein, welches bei hoher Wärmebeständigkeit gute Federeigenschaften aufweist, damit der Festsitz der Abdeckhaube auch bei hängender Leuchte sicher ist. Die Abdeckhaube ist einfach und leicht auf das Basiselement aufsetzbar und von diesem abnehmbar, wenn der Eingriff des federnden zweiten Abschnitts in die Hinterschneidung des Basiselementes selbstrastend und selbsttätig lösbar ist.

Das Federelement weist auch bei hoher Wärmebelastung gute Federeigenschaften auf, wenn das Federelement aus Federblech besteht.

Die Verbindung zwischen dem Federelement und dem Basiselement ist einfach im Aufbau und kostengünstig herstellbar und sicher gegen ungewolltes Lösen, wenn das Federelement zwei zungenförmig ausgeführte zweite Abschnitte aufweist, welche mit ihren freien Endabschnitten in eine Rastöffnung des Basiselementes eingeführt sind und in jeweils eine von sich zugewandten Randabschnitten der Rastöffnung gebildeten Hinterschneidungen mit jeweils einer Ausbiegung eingreifen.

Das Federelement ist beim Abziehen der Abdeckhaube von dem Basiselement sicher gegen ein ungewolltes Verbiegen, wenn ausgehend von einer Befestigungsvorrichtung zwischen dem Federelement und der Abdeckhaube sich der erste Abschnitt zur Lichtscheibe und der zweite Abschnitt zum Basiselement hin erstreckt, da dann die Abzugskraft durch die oder nahe der Befestigungsvorrichtung verläuft und somit kein oder nur ein sehr kleines Moment auf das Federelement wirken kann. Deshalb kann das Federelement aus einem sehr dünnen Federblech hergestellt sein. Die Befestigungsvorrichtung ist einfach aufgebaut und kostengünstig herstellbar, wenn sie von einer an die Innenseite der Abdeckhaube angeformten Rastnase und einer Öffnung gebildet ist, welche in den Boden einer zur Abdeckhaube geöffneten Vertiefung des Federelements eingebracht ist und deren Rand von der Rastnase selbstrastend hintergriffen ist. Das Federelement ist wegen der Vertiefung fest zwischen der Rastnase und der Innenseite der Abdeckhaube einspannbar.

Die Lichtscheibe ist nach dem Befestigen des Federelements an der Abdeckhaube durch einfache Mittel zur Abdeckhaube genau fixiert, wenn der zweite Abschnitt des Federelements unter Vorspannung an der Innenseite eines seitlichen Randabschnittes der Lichtscheibe anliegt und den Randabschnitt gegen die Innenseite der Abdeckhaube drückt und wenn zwischen dem seitlichen Randabschnitt und der Abdeckhaube mindestens eine Nut-Feder-Verbindung besteht. Der seitliche Randabschnitt kann durch eine schalenförmige Ausführung der Lichtscheibe gebildet sein. Wegen dem seitlichen Randabschnitt steht die Lichtscheibe von selbst auf der Abdeckhaube und die Nut-Feder-Verbindung ist besonders einfach herstellbar, wenn an die Innenseite der Abdeckhaube Zapfen angeformt sind, welche in Öffnungen des seitlichen Randabschnitts der Lichtscheibe mit kleinem Spiel eingreifen.

Bei einer besonders vorteilhaften Weiterbildung der Erfindung weist das Federelement einen federnden dritten Abschnitt auf, welcher ausgehend von der Befestigungsvorrichtung entgegen der Lichtaustrittsrichtung verläuft und einen zur Abdeckhaube hin abgewinkelten freien Endabschnitt aufweist, welcher unter Vorspannung an einem Abstützelement der Abdeckhaube anliegt und das Federelement sowohl gegen die Innenseite der Abdeckhaube als auch mit einem Rand der Öffnung gegen die Rastnase drückt, wobei die Rastnase zum dritten Abschnitt hin weist. Dadurch ist ein klapperfreier Festsitz des Federelementes an der Abdeckhaube auch bei groben Toleranzen zwischen dem Federelement und der Abdeckhaube möglich. Außerdem ist der Festsitz des Federelementes an der Abdeckhaube auch bei einer sehr großen Abzugskraft sicher. Ferner ist es vorteilhaft, wenn das Federelement aus einem Blechstreifen besteht, welcher in seiner Hauptausdehnung annähernd in Lichtaustrittsrichtung verläuft, wobei die Befestigungsvorrichtung annähernd mittig des Federelementes angeordnet ist.

In diesem Zusammenhang ist es weiterhin vorteilhaft, wenn sowohl aus dem ersten Abschnitt als auch aus dem dritten Abschnitt des Federelementes ein zungenförmiger zweiter Abschnitt freigeschnitten ist, wobei die beiden federnden zungenförmigen zweiten Abschnitte mit ihrer Wurzel benachbart zur Befestigungsvorrichtung des Federelementes liegen und aus dem Federelement um eine quer zur Lichtaustrittsrichtung verlaufende Biegelinie zur Abdeckhaube hin herausgebogen sind. Dadurch entsteht beim Ausstanzen des Federelementes aus einem Blech nur sehr wenig Blechverschnitt. Außerdem verläuft bei der Demontage der Abdeckhaube die Abzugskraft genau durch die Befestigungsvorrichtung.

Bei einer Leuchte mit mehreren nebeneinander angeordneten Reflektoren, welche durch eine gemeinsame Lichtscheibe abgedeckt sind, ist es weiterhin vorteilhaft, wenn die Reflektoren mit dem Basiselement einstückig aus Kunststoff hergestellt sind und Rastöffnungen des Basiselementes jeweils zwischen benachbarte Reflektoren in das Basiselement eingebracht sind. Dadurch ist der zweite Abschnitt so kurz wie möglich ausgeführt und kann somit auch bei dünnerem Federblech mit einer ausreichend großen Vorspannung in die Hinterschneidung des Basiselementes eingreifen. Ferner sind die die Hinterschneidungen bildenden Rastöffnungen platzsparend zwischen benachbarte Reflektoren in das Basiselement eingebracht. Durch die einstückige Ausführung der Reflektoren mit dem Basiselement ist der sichere Festsitz der Abdeckhaube an dem Basiselement sicher.

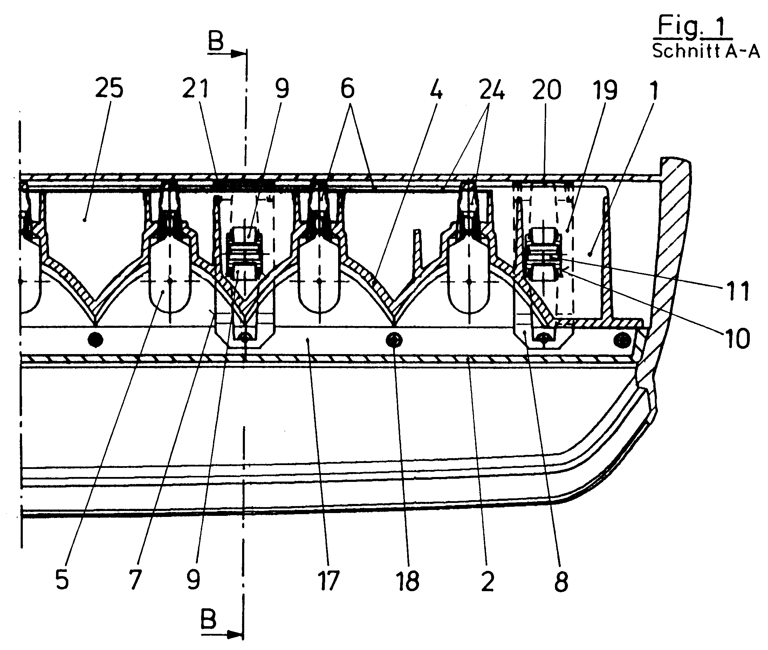

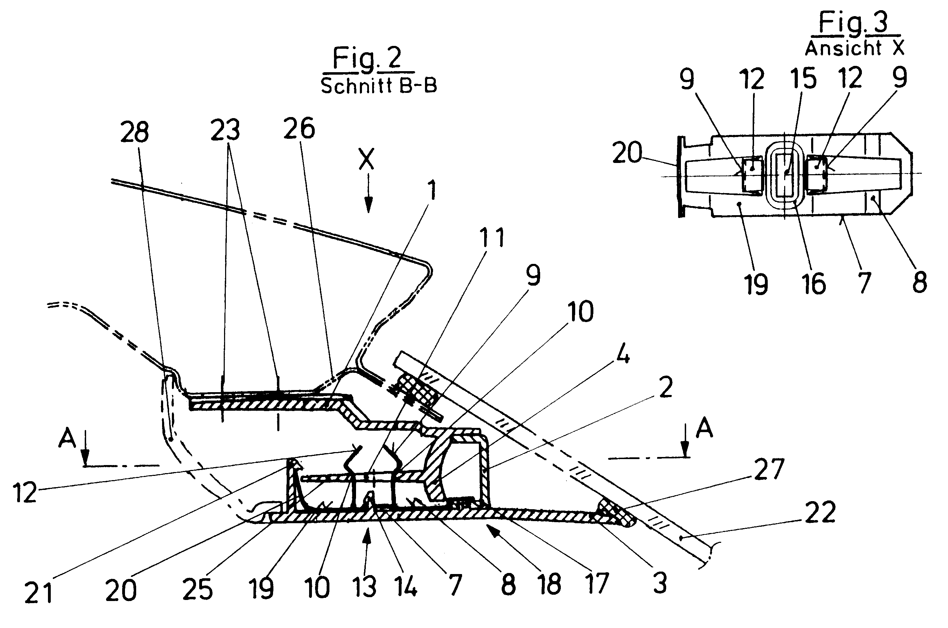

Ein Ausführungsbeispiel der Erfindung ist in der Zeichnung dargestellt, und zwar zeigen
- Figur 1: einen horizontalen mittleren Schnitt nach der Linie A-A in Figur 2 durch eine zusätzliche hochgesetzte Bremsleuchte für Fahrzeuge;
- Figur 2: einen Schnitt nach der Linie B-B in Figur 1 und
- Figur 3: eine Ansicht aus Richtung X in Figur 2 auf ein Federelement, welches eine selbstrastende Verbindung zwischen einem an der Fahrzeugkarosserie befestigbaren Basiselement und einer das Basiselement abdeckenden Abdeckhaube herstellt.

Eine zusätzliche hochgesetzte Bremsleuchte ist im Fahrgastinnenraum eines Fahrzeuges hinter einer Heckscheibe (22) am oberen Randbereich der Heckscheibe (22) angeordnet.

Ein aus Kunststoff bestehendes plattenförmiges Basiselement (1) ist an das an die Heckscheibe (22) angrenzende obere Karosserieblech (26) an den Befestigungsstellen (23) mittels nicht dargestellter Schrauben befestigt. Das plattenförmige Basiselement (1) erstreckt sich von den Befestigungsstellen (23) bis nahe zur Heckscheibe (22) hin. Nahe der Heckscheibe (22) sind an die nach unten gerichtete Seite des Basiselements (1) mehrere nebeneinander angeordnete schalenförmige Reflektoren (4) einstückig angeformt. In die Reflektoren (4) ist im Bereich ihres Scheitels eine Öffnung zur Aufnahme einer Lampe (5) eingebracht, welche von der Vorderseite des Reflektors (4) her in die Öffnung einsetzbar ist. Die Lampen (5) greifen mit ihrem Glassockel in einen die Öffnung auf der Rückseite des Reflektors (4) umgebenden Hals ein und stehen mit ihrem Glassockel mit elektrischen Kontakteinrichtungen (24) in Verbindung. Die Kontakteinrichtungen (24) bestehen aus im Halsdes Reflektors (4) angeordneten Steckelementen, welche mit Leiterbahnen verbunden sind. An die Rückseite der Reflektoren (4) ist mittig eine annähernd über die gesamte Länge der Leuchte verlaufende horizontale Wand (25) angeformt, welche in ihrem entgegen der Lichtaustrittrichtung gerichteten Ende die Leiterbahnen der elektrischen Kontakteinrichtungen (24) für die Lampe (5) trägt.

Die Reflektoren (4), die Wand (25) und der größte Teil des Basiselementes (1) sind durch eine Abdeckhaube (3) abgedeckt. Die Abdeckhaube (3) erstreckt sich von den Reflektoren (4) bis an die Innenseite der Heckscheibe (22) heran, damit im Fahrgastinnenraum kein Störlicht entstehen kann. Zwischen der Abdeckhaube (3) und der Heckscheibe (22) ist eine Dichtung (27) angeordnet. Die Abdeckhaube (3) liegt mit ihrem entgegen der Lichtaustrittsrichtung gerichteten Randabschnitt an einer unlösbar mit dem Karosserieblech (26) verbundenen Blende (28) an. Die Reflektoren (4) sind auf ihrer Vorderseite durch eine schalenförmige lichtdurchlässige Lichtscheibe (2) abgeschlossen, deren Seitenwand mit einem Randabschnitt (17) an der Innenseite der Abdeckhaube (3) anliegt. Die Lichtscheibe (2) ist zur Abdeckhaube (3) hin durch mehrere Nut-Feder-Verbindungen (18) fixiert. Die Feder dieser Verbindungen besteht aus einem an die Innenseite der Abdeckhaube (3) angeformten Zapfen und die Nut aus einer entsprechenden Öffnung in dem seitlichen Randabschnitt (17) der Lichtscheibe (2).

Die Lichtscheibe (2) ist an der Abdeckhaube (3) und die Abdeckhaube (3) an dem Basiselement (1) durch mehrere Federelemente (7) gehalten. Die Federelemente (7) sind aus einem streifenförmigen Federblech hergestellt und verlaufen in ihrer Hauptausdehnung etwa in Lichtaustrittsrichtung. Die Federelemente (7) sind etwa mittig mittels einer Befestigungsvorrichtung (13) an der Abdeckhaube (3) befestigt. Die Befestigungsvorrichtungen (13) bestehen aus einer an die Innenseite der Abdeckhaube (3) angeformten Rastnase (14), welche in eine rechteckförmige Öffnung (15) des Federelementes (7) eingreift. Die Öffnung (15) ist in dem Boden einer zum Basisteil (1) hin gezogenen Vertiefung (16) des Federelementes (7) eingebracht. Wegen der Vertiefung (16) ist die Rastnase (14) zur Innenseite der Abdeckhaube (3) beabstandet und somit kann das Federelement (7) zwischen Rastnase (14) und der Innenseite der Abdeckhaube (3) fest eingespannt sein. Das Federelement (7) weist ausgehend von der Befestigungsvorrichtung (13) einen zur Lichtscheibe (2) hin verlaufenden ersten Abschnitt (8) auf, welcher mit seinem freien Endabschnitt unter Vorspannung an der Innenseite des seitlichen Randabschnitts (17) der Lichtscheibe (2) anliegt und den seitlichen Randabschnitt (17) gegen die Innenseite der Abdeckhaube (3) drückt. Weiterhin weist das Federelement (7) ausgehend von der Befestigungsvorrichtung (13) einen von der Lichtscheibe (2) weg weisenden dritten Abschnitt (19) auf, welcher mit seinem freien Endabschnitt (20) zum Basiselement (1) hin abgewinkelt ist. Der Endabschnitt (20) liegt mit seinem freien Ende unter Vorspannung an einem Abstützelement (21) an und drückt sowohl den dritten Abschnitt (19) gegen die Innenseite der Abdeckhaube (3) als auch einen Rand der Öffnung (15) gegen einen die Rastnase (14) tragenden Ansatz. Das Abstützelement (21) besteht aus einer quer zur Lichtaustrittsrichtung verlaufenden und zum Basiselement (1) hin weisenden Wandung und einem in Lichtaustrittsrichtung weisenden Rastvorsprung der Wandung. Beim Aufsetzen des Federelementes (7) auf die Abdeckhaube (3) legt sich der erste Abschnitt (8) mit seinem freien Endabschnitt unter Vorspannung an den seitlichen Randabschnitt (17) der Lichtscheibe (2) an und die Rastnase (14), welche entgegen der Lichtaustrittsrichtung gerichtet ist, hintergreift selbsttätigt einen Rand der Öffnung (15), und das freie Ende des Endabschnitts (20) des dritten Abschnitts (19) hintergreift selbsttätig den Rastvorsprung des Abstützelementes (21) und liegt unter Vorspannung an dem Rastvorsprung und der Wandung des Abstützelementes (21) an.

Aus dem ersten Abschnitt (8) und dem dritten Abschnitt (19) des Federelementes (7) ist jeweils ein zungenförmiger zweiter Abschnitt (9) frei geschnitten. Die zungenförmigen zweiten Abschnitte (9) grenzen mit ihrer Wurzel an die Befestigungsvorrichtung (13) an und verlaufen in ihrer Längsausdehnung annähernd in Lichtaustrittsrichtung. Die zungenförmigen zweiten Abschnitte (9) sind an ihrer Wurzel um eine quer zur Längsausdehnung des Federelementes (7) verlaufende Biegelinie zum Basiselement (1) hin gebogen. Die freien Endabschnitte der zungenförmigen zweiten Abschnitte (9) weisen jeweils eine Ausbiegung (12) auf. Die dem ersten Abschnitt benachbarte Ausbiegung weist in Lichtaustrittsrichtung, während die dem dritten Abschnitt (19) benachbarte Ausbiegung (12) entgegen der Lichtaustrittsrichtung gerichtet ist. Die beiden zweiten Abschnitte (9) sind durch eine Rastöffnung (11) der Wand (25) des Basiselementes (1) hindurchgeführt und greifen mit ihrer Ausbiegung (12) in eine von dem Rand der Rastöffnung (11) gebildete Hinterschneidung (10) ein. Die Ausbiegungen (12) weisen auf sich abgewandten Seiten solche Auflaufflächen auf, daß der Eingriff in die Hinterschneidung (10) selbsttätig herstellbar und selbsttätig lösbar ist.

Nach einem Aufsetzen der Abdeckhaube (3) auf das Basiselement (1) liegt die Abdeckhaube (3) vor den Reflektoren (4) über die Lichtscheibe (2) an dem Basiselement (1) und hinter den Reflektoren (4) entweder an dem Basiselement (1) oder der Blende (28) fest an.

### Bezugszeichenliste

### Leuchte für Fahrzeuge

- 1: Basiselement
- 2: Lichtscheibe
- 3: Abdeckhaube
- 4: Reflektor
- 5: Lampe
- 6: Kontaktierungseinrichtung
- 7: Federelement
- 8: erster Abschnitt
- 9: zweiter Abschnitt
- 10: Hinterschneidung
- 11: Rastöffnung
- 12: Ausbiegung
- 13: Befestigungsvorrichtung
- 14: Rastnase
- 15: Öffnung
- 16: Vertiefung
- 17: Randabschnitt
- 18: Nut-Feder-Verbindung
- 19: dritter Abschnitt
- 20: Endabschnitt
- 21: Abstützelement
- 22: Heckscheibe
- 23: Befestigungsstelle
- 24: Kontakteinrichtung
- 25: Wand
- 26: Karosserieblech
- 27: Dichtung
- 28: Blende

## Patentansprüche

1. Leuchte für Fahrzeuge, mit einem an einer Fahrzeugkarosserie befestigbaren Basiselement (1), mit einer auf das Basiselement (1) aufgesetzten Abdeckhaube (3), mit mindestens einem zwischen Basiselement (1) und Abdeckhaube (3) angeordneten Reflektor (4), welcher auf seiner Vorderseite durch eine quer zum Basiselement (1) verlaufende lichtdurchlässige Lichtscheibe (2) abgeschlossen ist, und mit einer von der Vorderseite des Reflektors (4) her in eine Öffnung des Reflektors (4) eingesetzten Lampe (5), dadurch gekennzeichnet, daß von dem Basiselement (1) der Reflektor (4) und Kontaktierungseinrichtungen (6) für die Lampe (5) getragen sind und daß an der Innenseite der Abdeckhaube (3) mindestens ein Federelement (7) befestigt ist, welches die Lichtscheibe (2) mit einem federnden ersten Abschnitt (8) gegen die Innenseite der Abdeckhaube (3) drückt und welches mit einem federnden zweiten Abschnitt (9) selbsttätig in eine Hinterschneidung (10) des Basiselementes (1) eingreift.

2. Leuchte nach Anspruch 1, dadurch gekennzeichnet, daß der Eingriff des federnden zweiten Abschnitts (9) in die Hinterschneidung (10) des Basiselementes (1) selbstrastend und selbsttätig lösbar ist.

3. Leuchte nach Anspruch 1 oder 2, dadurch gekennzeichnet, daß das Federelement (7) aus Federblech besteht.

4. Leuchte nach einem der Ansprüche 1 bis 3, dadurch gekennzeichnet, daß das Federelement (7) zwei zungenförmig ausgeführte zweite Abschnitte (9) aufweist, welche mit ihren freien Endabschnitten in eine Rastöffnung (11) des Basiselementes (1) eingeführt sind und in jeweils eine von sich zugewandten Randabschnitten der Rastöffnung (11) gebildeten Hinterschneidungen (10) mit jeweils einer Ausbiegung (12) eingreifen.

5. Leuchte nach einem der Ansprüche 1 bis 4, dadurch gekennzeichnet, daß ausgehend von einer Befestigungsvorrichtung (13) zwischen dem Federelement (7) und der Abdeckhaube (3) sich der erste Abschnitt (8) zur Lichtscheibe (2) und der zweite Abschnitt (9) zum Basiselement (1) hin erstreckt.

6. Leuchte nach Anspruch 5, dadurch gekennzeichnet, daß die Befestigungsvorrichtung (13) von einer an die Innenseite der Abdeckhaube (3) angeformten Rastnase (14) und einer Öffnung (15) gebildet ist, welche in den Boden einer zur Abdeckhaube (3) geöffneten Vertiefung (16) des Federelementes (7) eingebracht ist und deren Rand von der Rastnase (14) selbstrastend hintergriffen ist.

7. Leuchte nach einem der Ansprüche 1 bis 6, dadurch gekennzeichnet, daß der erste Abschnitt (8) des Federelementes (7) unter Vorspannung an der Innenseite eines seitlichen Randabschnittes (17) der Lichtscheibe (2) anliegt und den Randabschnit (17) gegen die Innenseite der Abdeckhaube (3) drückt, und daß zwischen dem seitlichen Randabschnitt (17) und der Abdeckhaube (3) mindestens eine Nut-Feder-Verbindung (18) besteht.

8. Leuchte nach einem der Ansprüche 5 bis 7, dadurch gekennzeichnet, daß das Federelement (7) einen federnden dritten Abschnitt (19) aufweist, welcher ausgehend von der Befestigungsvorrichtung (13) entgegen der Lichtaustrittsrichtung verläuft und einen zur Abdeckhaube (3) hin abgewinkelten freien Endabschnitt (20) aufweist, welcher unter Vorspannung an einem Abstützelement (21) der Abdeckhaube (3) anliegt und das Federelement (7) sowohl gegen die Innenseite der Abdeckhaube (3) als auch mit einem Rand der Öffnung (15) gegen die Rastnase (14) drückt, wobei die Rastnase (14) zum dritten Abschnitt (19) hin weist.

9. Leuchte nach Anspruch 8, dadurch gekennzeichnet, daß sowohl aus dem ersten Abschnitt (8) als auch aus dem dritten Abschnitt (19) des Federelementes (7) ein zungenförmiger zweiter Abschnitt (9) freigeschnitten ist, wobei die beiden zungenförmigen zweiten Abschnitte (9) mit ihrer Wurzel zur Befestigungsvorrichtung (13) des Federelementes (7) benachbart liegen und aus dem Federelement (7) um eine quer zur Lichtaustrittsrichtung verlaufende Biegelinie zum Basiselement (1) hin herausgebogen sind.

10. Leuchte mit mehreren nebeneinander angeordneten Reflektoren (4), welche durch eine gemeinsame Lichtscheibe (2) abgedeckt sind, nach einem der Ansprüche 1 bis 9, dadurch gekennzeichnet, daß die Reflektoren (4) mit dem Basiselement (1) einstückig aus Kunststoff hergestellt sind und Hinterschneidungen (10) des Basiselementes (1) jeweils zwischen benachbarte Reflektoren (4) in das Basiselement (1) eingebracht sind.

## Claims

1. Light unit for vehicles, having a base member (1) which can be secured to vehicle bodywork, and having a cover hood (3) mounted on the base member (1), and having at least one reflector (4) that is arranged between the base member (1) and the cover hood (3) and is closed off at its front by a light transmitting lens (2) extending transversely with respect to the base member (1), and having a light bulb (5) fitted in an opening of the reflector (4) from the front of the reflector (4), characterised in that the reflector (4) and contacting devices (6) for the light bulb (5) are carried by the base member (1) and in that at least one spring element (7) is secured at the inner surface of the cover hood (3), which presses the lens (2) with a resilient first section (8) against the inner surface of the cover hood (3) and which with a resilient second section (9) engages automatically in an undercut (10) of the base member (1).

2. Light unit according to claim 1, characterised in that the engagement of the resilient second section (9) in the undercut (10) of the base member (1) is releasable by self snapping, automatically.

3. Light unit according to claim 1 or 2, characterised in that the spring element (7) consists of spring sheet metal.

4. Light unit according to one of claims 1 to 3, characterised in that the spring element (7) has two second sections (9) made tongue shaped which are introduced by their free end sections in a snap opening (11) of the base member (1) and which with one outward bend (12) respectively engage in respective undercuts (10) formed by facing edge sections of the snap opening (11).

5. Light unit according to one of claims 1 to 4, characterised in that, starting from a securing device (13) between the spring element (7) and the cover hood (3), the first section (8) extends towards the lens (2) and the second section (9) towards the base member (1).

6. Light unit according to claim 5, characterised in that the securing device (13) is formed by a latching lug (14) formed onto the inner surface of the cover hood (3), and by an opening (15) provided in the floor of a depression (16) in the spring element (7) that itself is open to the cover hood (3), the latching lug (14) engaging behind the edge of the opening (15) by self latching.

7. Light unit according to one of claims 1 to 6, characterised in that the first section (8) of the spring element (7) rests under pre-load against the inner surface of a lateral edge section (17) of the lens (2) and presses the edge section (17) against the inner surface of the cover hood (3), and in that there is at least one key and seat connection between the lateral edge section (17) and the cover hood (3).

8. Light unit according to one of claims 5 to 7, characterised in that the spring element (7) has a resilient third section (19) which, starting from the securing device (13), extends in the direction opposite to the direction of emerging light, and has a free end section (20) angled towards the cover hood (3), which under pre-load rests against a reaction element (21) of the cover hood (3) and presses the spring element (7) both against the inner surface of the cover hood (3) and also by way of an edge of the opening (15) against the latching lug (14), the latching lug (14) pointing towards the third section (19).

9. Light unit according to claim 8, characterised in that a tongue shaped second section (9) is cut free both from the first section (8) and also from the third section (19) of the spring element (7), the two tongue shaped second sections (9) being disposed with their root adjacent to the securing device (13) for the spring element (7), and being bent from the spring element (7) towards the base member (1) about a bend line that extends transversely with respect to the direction of emerging light.

10. Light unit having a plurality of reflectors (4) arranged next to each other which are covered by a common lens (2), being a light unit according to one of claims 1 to 9, characterised in that the reflectors (4) are made integrally with the base member (1), of plastics, undercuts (10) of the base member (1) being provided in the base member (1) between respective neighbouring reflectors (4).

## Revendications

1. Feu d'éclairage pour véhicule, comportant un élément de base (1) susceptible d'être fixé sur une carrosserie de véhicule, une chape de recouvrement (3) placée sur l'élément de base (1), au moins un réflecteur (4) agencé entre l'élément de base (1) et la chape de recouvrement (3), lequel est fermé sur sa face antérieure par une plaque d'éclairement (2) transparente transversale à l'élément de base (1), et une lampe (5) mise en place depuis la face antérieure du réflecteur (4) dans une ouverture du réflecteur (4), caractérisé en ce que le réflecteur (4) et des dispositifs de contact (6) pour la lampe (5) sont portés par l'élément de base (1), et en ce que sur la face intérieure de la chape de recouvrement (3) est fixé au moins un élément de ressort (7) qui presse la plaque d'éclairement (2) avec un premier tronçon (8) élastique contre la face intérieure de la chape de recouvrement (3) et qui s'engage automatiquement avec un second tronçon (9) élastique dans une contre-dépouille (10) de l'élément de base (1).

2. Feu d'éclairage selon la revendication 1, caractérisé en ce que l'engagement du second tronçon (9) élastique dans la contre-dépouille (10) de l'élément de base (1) est à auto-enclenchement et automatiquement détachable.

3. Feu d'éclairage selon l'une ou l'autre des revendications 1 et 2, caractérisé en ce que l'élément de ressort (7) est en tôle à ressort.

4. Feu d'éclairage selon l'une quelconque des revendications 1 à 3, caractérisé en ce que l'élément de ressort (7) présente deux seconds tronçons (9) réalisés en forme de languettes, lesquels sont introduits avec leurs tronçons d'extrémité libres dans une ouverture d'enclenchement (11) de l'élément de base (1) et s'engagent avec une pliure (12) dans une contre-dépouille (10) respective formée par des tronçons de bord orientés les uns vers les autres de l'ouverture d'enclenchement (11).

5. Feu d'éclairage selon l'une quelconque des revendications 1 à 4, caractérisé en ce qu'en partant d'un dispositif de fixation (13) entre l'élément de ressort (7) et la chape de recouvrement (3), le premier tronçon (8) s'étend vers la plaque d'éclairement (2) et le second tronçon (9) s'étend vers l'élément de base (1).

6. Feu d'éclairage selon la revendication 5, caractérisé en ce que le dispositif de fixation (13) est formé par un ergot d'enclenchement (14) formé sur la face intérieure de la chape de recouvrement (3) et par une ouverture (15) qui est ménagée dans le fond d'un creux (16), ouvert vers la chape de recouvrement (3), de l'élément de ressort (8) et dont le bord est engagé en enclenchement automatique par l'arrière par l'ergot d'enclenchement (14).

7. Feu d'éclairage selon l'une quelconque des revendications 1 à 6, caractérisé en ce que le premier tronçon (8) de l'élément de ressort (7) est en appui sous précontrainte sur la face intérieure d'un tronçon de bord (17) latéral de la plaque d'éclairement (2) et presse le tronçon de bord (17) contre la face intérieure de la chape de recouvrement (3) et en ce qu'entre le tronçon de bord (17) latéral et la chape de recouvrement (3) se trouve au moins une liaison à rainure-et-languette (18).

8. Feu d'éclairage selon l'une quelconque des revendications 5 à 7, caractérisé en ce que l'élément de ressort (7) présente un troisième tronçon (19) élastique qui s'étend depuis le dispositif de fixation (13) à l'encontre de la direction de sortie de la lumière et présente un tronçon terminal (20) libre coudé vers la chape de recouvrement (3), lequel est en appui sous précontrainte contre un élément de soutien (21) de la chape de recouvrement (3) et presse l'élément de ressort (7) tant contre la face intérieure de la chape de recouvrement (3) qu'avec aussi un bord de l'ouverture (15) contre l'ergot d'enclenchement (14), l'ergot d'enclenchement (14) étant orienté vers le troisième tronçon (19).

9. Feu d'éclairage selon la revendication 8, caractérisé en ce qu'un second tronçon (9) en forme de languette est découpé tant dans le premier tronçon (8) que dans le troisième tronçon (19) de l'élément de ressort (7), les deux seconds tronçons (9) en forme de languettes étant situés avec leur base au voisinage du dispositif de fixation (13) de l'élément de ressort (7) et repliés vers l'élément de base (1) à partir de l'élément de ressort (7) autour d'une ligne de pliure s'étendant transversalement à la direction de sortie de la lumière.

10. Feu d'éclairage comportant plusieurs réflecteurs (4) disposés les uns à côté des autres, lesquels sont recouverts par une plaque d'éclairement (2) commune, selon l'une quelconque des revendications 1 à 9, caractérisé en ce que les réflecteurs (4) sont réalisés en matière plastique d'une seule pièce avec l'élément de base (1) et en ce que des contre-dépouilles (10) de l'élément de base (1) sont ménagées entre chaque réflecteur voisin (4) dans l'élément de base (1).
